# EUROPÄISCHE PATENTSCHRIFT

(11) **EP 4 273 842 B1**
(45) Veröffentlichungstag und Bekanntmachung des Hinweises auf die Patenterteilung: **04.06.2025**
(21) Anmeldenummer: 23170091.5
(22) Anmeldetag: 26.04.2023
(51) Int. Cl.: G09B 15/06

(54) **LERNHILFE FÜR BLECHBLASINSTRUMENTE**
TEACHING AID FOR BRASS INSTRUMENTS
AIDE À L'APPRENTISSAGE POUR INSTRUMENTS DE MUSIQUE À VENT EN TÔLE

(30) Priorität: 02.05.2022 AT 600622022
(43) Veröffentlichungstag der Anmeldung: 08.11.2023
(73) Patentinhaber: Schieder, Bernhard, 8654 Fischbach (AT)
(72) Erfinder: Schieder, Bernhard, 8654 Fischbach (AT)
(74) Vertreter: Hübscher & Partner Patentanwälte GmbH

(56) Entgegenhaltungen:
- CN-U- 206 584 726
- DE-T2- 68 909 744
- US-A- 2 734 417
- US-A1- 2018 211 642
- US-A1- 2019 221 198

## Beschreibung

Die Erfindung bezieht sich auf eine Lernhilfe für Blechblasinstrumente zur Förderung einer technisch richtigen Griff- bzw. Handgelenksstellung.

Wenn ein Schüler das Spiel auf Blechblasinstrumenten erlernt, hat er viele Herausforderungen zu meistern. Der Schüler muss sich gleichzeitig auf die Literatur konzentrieren, den richtigen Ansatz am Mundstück finden bzw. halten, die entsprechende Körperspannung aufbauen, richtig atmen, die Muskulatur im Mundbereich entsprechend anspannen und auch die Ventile des Instrumentes richtig bedienen. Durch die gleichzeitige Konzentration des Schülers auf diese unterschiedlichen Aufgaben, haben viele Schüler Schwierigkeiten dabei, sich eine technisch richtige Stellung des Handgelenkes anzugewöhnen. Ohne eine technisch richtige Handgelenksstellung ist ein exaktes Bedienen der Ventilknöpfe aber kaum möglich.

Darüber hinaus kann eine falsche Handgelenksstellung zu etwaigen Haltungsschäden beim Musiker führen.

Aus DE 10 2013 009 828 B4 ist ein Fingerübungsgerät zur Förderung der Feinmotorik der Finger einer Hand, mit mindestens drei durch die Finger der Hand bewegbaren Betätigungselementen, die sich über Federelemente in einem Gerätegehäuse abstützen, bekannt. Dieses Fingerübungsgerät ist für die Nutzergruppe der Musiker, wie auch für die Nutzergruppe der Patienten der Orthopädie bzw. Rehabilitation, vorgesehen.

Die US 3 447 415 A beschreibt ein Übungsgerät für Musiker, bei dem in einem Gehäuse drei federbelastete Stempel mit je einer Fingerauflage angeordnet sind. Im Gehäuse weist der Stempel einen Ventilknopf auf, an dem sich eine, im Gehäuse sitzende Schraubenfeder, abstützt.

Nachteilig an beiden Lernhilfen ist, dass diese vom Blechblasinstrument separate Apparaturen sind, mit denen unabhängig vom Instrument geübt werden muss. Auf diese Weise kann demnach das natürliche Spielgefühl, wie dies beim Üben am Blechblasinstrument vorherrscht, nur bedingt simuliert werden. Darüber hinaus kann zwar mithilfe dieser Lernhilfen die Feinmotorik der Finger verbessert werden, nicht aber die Haltung des Handgelenks des Musikers.

Aus dem Stand der Technik sind zudem Haltegriffe für Holzblasinstrumente bekannt. So zeigen die US20190221198A1 und die US20180211642A1 Fingergriffe für Querflöten, die eine natürlichere Handpositionierung ermöglichen. Die DE68909744T2 stellt eine Daumenstütze für Blockflöten vor, die das Öffnen und Schließen der Ringlöcher durch die Entlastung der übrigen Finger erleichtert. In der CN206584726U ist ein Daumenschutz für Daumenauflagen einer Klarinette gezeigt.

Ein typisches Blechblasinstrument, bei dem die Erfindung zum Einsatz kommen kann, ist in der US2734417A beispielhaft vorgestellt.

Der Erfindung liegt somit die Aufgabe zugrunde, eine Lernhilfe der eingangs geschilderten Art vorzuschlagen, welche trotz Aufrechterhaltung eines natürlichen Spielgefühls eine Korrektur der Handgelenkstellung des Musikers ermöglicht.

Insbesondere liegt der vorliegenden Erfindung auch die Aufgabe zugrunde, eine einfache Lernhilfe zu entwickeln, die direkt am Instrument des Schülers verwendet werden kann und Handgelenk sowie Finger des Musikers in eine vorteilhafte Stellung bzw. Position führt bis sich der Musiker an die bevorzugte Stellung des Handgelenkes gewöhnt hat. Danach kann die Lernhilfe jeder Zeit wieder abgenommen werden.

Die Erfindung löst die gestellte Aufgabe dadurch, dass die Lernhilfe eine Aufnahme für ein Mundrohr eines Blechblasinstruments aufweist, von der eine Daumenführung zum Positionieren eines Daumens abragt, wobei die Daumenführung einen Anschlag für eine Daumenbeere des Daumens bildet und wobei eine Anschlagfläche des Anschlags für die Daumenbeere wenigstens abschnittsweise in einer Kippfläche verläuft, die aus einer Bezugsfläche, die normal zur Aufnahmelängsachse verläuft, um eine Kippachse gekippt ist. Zufolge der erfindungsgemäßen Maßnahmen kann die Lernhilfe am Mundrohr aufgesteckt und wieder abgenommen werden, sodass das Üben bzw. Training direkt am Instrument erfolgen kann. Durch Ausrichten der Lernhilfe entlang des Mundrohrs kann der Abstand vom in der Lernhilfe befindlichen Daumen zu den an den Ventilknöpfen des Blechblasinstruments aufgesetzten Fingern vorgegeben werden, sodass eine korrekte Haltung des Handgelenks des Musikers vorgegeben werden kann. In aufgestecktem Zustand der Lernhilfe ragt die Daumenführung in eine von den Ventilknöpfen des Blechblasinstruments abgewandte Richtung.

So kann sich der Schüler an die bevorzugte Handgelenksstellung gewöhnen bzw. diese je nach persönlichem Bedürfnis immer wieder temporär anstecken bzw. abnehmen. Durch unterschiedlich große Aufnahmen für die Daumenspitze kann eine derartige Lernhilfe sowohl für Kinder, wie auch Erwachsene konfiguriert werden. Je nachdem, ob die Lernhilfe (entlang des Mundrohres) näher am Ventilblock, oder weiter weg von diesem positioniert wird, kann die Lernhilfe auf die unterschiedlichen Größen der Musikerhände eingestellt werden. Bei Schülern wird die Lernhilfe vorzugsweise gemeinsam mit dem Lehrer auf die richtige Position eingestellt. Zusammenfassend erfüllt die Erfindung somit zwei Aufgaben. Die erste Aufgabe ist die Befestigung der Lernhilfe am Mundrohr des Instrumentes. Die zweite wesentliche Aufgabe der Lernhilfe ist die eigentliche Funktion als Führung (Positionsanleitung) für den Daumen

Die Aufnahme für das Mundrohr kann von einem oberen Teilstück der Lernhilfe gebildet sein, welches eine Befestigung zum abnehmbaren Befestigen auf dem Mundrohr des Blechblasinstrumentes ausbildet. Die Daumenführung zum Positionieren des Daumens kann von einem unteren Teilstück der Lernhilfe gebildet sein. Im Falle einer Trompete oder eines Flügelhorns kann die Lernhilfe zur Vorgabe einer korrekten Handgelenkshaltung zwischen Mundstück und Ventilknöpfe angeordnet sein.

Zwar kann durch die Vorgabe der Beabstandung zwischen Daumen und den übrigen Fingern bereits eine korrekte Grundhaltung des Handgelenks erzielt werden, allerdings ergibt sich eine besonders bezüglich einer ergonomischen Haltung fein justierbare Vorgabe der Handgelenksstellung, wenn die Daumenführung einen Anschlag für eine Daumenbeere des Daumens bildet. Durch Andrücken der Daumenbeere, also der dem Daumennagel gegenüberliegenden Seite des Daumenglieds, an den Anschlag passt sich die Kipplage des Daumens an den Anschlag an, indem die Daumenbeere im Wesentlichen parallel zu einer Anschlagfläche des Anschlags verläuft, sodass der Daumen in eine ergonomisch bevorzugte Lage ausgerichtet werden kann. Durch Kombination der korrekten Beabstandung von Daumen und übrigen Fingern mit der korrekten Kipplage des Daumens kann eine für den Musiker ergonomische Haltung des Handgelenks vorgegeben werden.

Es hat sich dabei herausgestellt, dass eine für das Handgelenk besonders schonende Haltung erzielt werden kann, wenn die Anschlagfläche des Anschlags für die Daumenbeere wenigstens abschnittsweise in einer Kippfläche verläuft, die normal zur Aufnahmelängsachse verläuft, um eine Kippachse gekippt ist. Die Kippachse selbst verläuft in der Bezugsfläche. Insbesondere kann die Kippfläche in einem Winkel von bis zu 60°, beispielsweise 0° - 60° aus der Bezugsfläche gekippt sein, weiter bevorzugt um 1° - 60°, noch weiter bevorzugt um 10° - 60°, insbesondere 20° - 50°. Auf diese Weise wird das Handgelenk in eine besonders ergonomische Stellung geführt, sodass sich beim Musiker auch nach langer Übezeit keine fehlhaltungsbedingten Schmerzen einstellen. Die Daumenführung kann somit einen Anschlag aufweisen, der 0° - 60° um eine quer zum Mundrohr verlaufende Achse in Richtung eines Mundstückes des Blechblasinstruments gekippt ist. Dies bedeutet, dass der dem Zeigefinger der Spielhand zugewandte Endabschnitt der Anschlagfläche des Anschlags näher beim Mundstück liegt, als der vom Zeigefinger abgewandte Endabschnitt. Die Lernhilfe kann abnehmbar auf dem Mundrohr des Instrumentes befestigt werden und sorgt somit auf einfachste Weise für eine korrekte Handgelenksstellung. Die Lernhilfe führt den Daumen des Musikers in eine bevorzugte Position und Rotation bzw. Anstellung. Diese einfache Führung des Daumens, sorgt in weiterer Folge für eine korrekte Stellung des gesamten Handgelenkes. Die Daumenführung für die Daumenspitze kann (um die richtige Handgelenksstellung noch besser anzuleiten) nicht nur im 90° Winkel zum Mundrohr ausgeführt, sondern auch um bis zu 60° nach vorne (Richtung Mundstück) gekippt werden.

Zur Führung bzw. Positionsanleitung für den Daumen kann die Aufnahme auf unterschiedliche Art und Weise ausgestaltet sein. Eine besonders exakte Vorgabe ergibt sich, wenn die Daumenführung eine Durchbruchsöffnung zum Einfassen einer Daumenkuppe umfasst. Dies kann beispielsweise durch eine Durchbruchsöffnung im unteren Teilstück ausgestaltet sein. Dadurch ergibt sich nicht nur ein Anschlag für die Daumenbeere, sondern eine umfangseitig um das Daumenglied verlaufende Zwangsführung, die kaum eine Abweichung von der Kipplagenvorgabe des Daumens zulässt. Eine reduzierte Variante der Daumenführung ergibt sich dadurch, dass die Daumenführung eine Mulde für die Daumenspitze umfasst. Die Mulde für die Daumenspitze kann wiederum im unteren Teilstück vorgesehen sein. Die Mulde weist im Gegensatz zur kompletten Einfassung des Daumenglieds eine weniger stark ausgeprägte Zwangsführung auf, sodass der Musiker aktiver auf die korrekte Kipplage des Daumens achten muss. In einer noch weiter reduzierten Form kann die Daumenführung ein Anschlagzapfen sein. Somit ist die Daumenführung im Bereich des Daumennagels des am Anschlagzapfen aufliegenden Daumens geöffnet und bewirkt die Kipplagenvorgabe nur durch Ausrichtung der Daumenbeere. Erst kann der Musiker bzw. Schüler mit einer Variante arbeiten, welche die gesamte Daumenspitze aufnimmt und zu einem späteren Zeitpunkt auf eine Variante mit geringerer Führung wechseln. Wenn sich der Schüler die richtige Handgelenksstellung angewöhnt hat, kann er die Lernhilfe dann ganz weglassen.

Um das natürliche Spielgefühl weiter zu verbessern, wird vorgeschlagen, dass die Daumenführung zur Aufnahme für das Mundrohr hin durchbrochen ist. Die Aufnahme kann somit so gegen das Mundrohr des Blechblasinstruments hin offen sein, dass der Daumen bei aufgesteckter Lernhilfe Kontakt zum Mundrohr hat. Auf diese Weise herrscht auch beim Üben mit der Lernhilfe Kontakt zwischen Daumen und Blechblasinstrument, sodass eine Muskel-Geist-Verbindung (Muscle-Mind-Conection) eingeübt werden kann, wodurch der Daumen bei Kontakt mit dem Mundrohr automatisch die bevorzugte, von der Lernhilfe vorgegebene Kipplage einnimmt, auch wenn die Lernhilfe nicht aufgesteckt ist.

Zum erleichterten lösbaren Aufstecken der Lernhilfe kann die Aufnahme eine formschlüssige, vorzugsweise eine form- und kraftschlüssige Befestigung ausbilden. In einer Ausgestaltung umgreift die Lernhilfe das Mundrohr teilweise und stellt eine formschlüssige Verbindung zum Mundrohr her. Wahlweise kann diese Verbindung durch Vorspannen dieser Umfassung auch zusätzlich kraftschlüssig ausgeführt werden, wodurch eine Klemmverbindung entsteht. Das Material der Lernhilfe kann eine gewisse Elastizität aufweisen, damit die Umfassung im Montagevorgang etwas geöffnet werden kann.

Um die Verbindung zum Mundrohr weiter zu verbessern, kann eine Aufnahmefläche der Aufnahme mit einer reibungsverstärkenden Einlage, insbesondere mit einer Gummierung oder Silikoneinlage, versehen sein. Beispielsweise kann die Kontaktfläche des oberen Teilstücks zum Mundrohr mit einer reibungsverstärkenden Einlage, insbesondere mit einer Gummierung oder Silikoneinlage, versehen sein.

Eine leichte und gleichzeitig robuste Ausgestaltung der Lernhilfe ergibt sich durch eine einstückige Fertigung dieser aus Kunststoff, insbesondere durch eine Fertigung mittels 3D-Druck. Nach einer Ausgestaltung der Erfindung wird die Lernhilfe bevorzugt aus Kunststoff ausgeführt. Natürlich kommen als Materialien alternativ auch Metall oder Holz, sowie eine Kombination dieser Materialien in Frage.

Vorzugsweise ist die Lernhilfe an einem Mundrohr eines Blechblasinstruments angeordnet. Es ergibt sich somit in einer Ausgestaltungsform ein Mundrohr mit einer Lernhilfe, wobei die Daumenführung so gegen das Mundrohr hin offen ist, dass der Daumen bei aufgesteckter Lernhilfe Kontakt zum Mundrohr hat, wobei im Bereich der Öffnung ein als Referenzpunkt wirkendes zusätzliches Teilstück angeordnet ist. Der Referenzpunkt kann auch bei entfernter Lernhilfe am Mundrohr verbleiben und somit zur korrekten Orientierung für die Daumenposition dienen.

In der Zeichnung ist der Erfindungsgegenstand beispielsweise dargestellt. Es zeigen
- Fig. 1: eine perspektivische Ansicht einer Trompete (beispielhaft für zuvor genannte Blechblasinstrumente) mit aufgesteckter Lernhilfe
- Fig. 2: eine perspektivische Ansicht von links oben dreier Lernhilfen in größerem Maßstab,
- Fig. 3: perspektivische Ansichten dreier Lernhilfen einer ersten Ausführungsform, wobei die Daumenführung zur Aufnahme für das Mundrohr hin durchbrochen ist,
- Fig. 4: eine perspektivische Ansicht der Lernhilfe aus Fig. 3 in noch größerem Maßstab, sowie einen Schnitt durch diese Lernhilfe in einer bevorzugten Variante, wobei die Daumenführung zur Aufnahme für das Mundrohr hin durchbrochen ist,
- Fig. 5: perspektivische Ansichten dreier Lernhilfen einer zweiten Ausführungsform, wobei die Daumenführung nicht zur Aufnahme hin durchbrochen ist,
- Fig. 6: eine perspektivische Ansicht der Lernhilfe aus Fig. 5 in noch größerem Maßstab, sowie einen Schnitt durch diese Lernhilfe, wobei die Daumenführung nicht zur Aufnahme für das Mundrohr hin durchbrochen ist,
- Figs. 7a bis 7d: unterschiedliche Ausführungsformen der Lernhilfe, wobei von Beispiel 1.1 zu Beispiel 1.2 zu Beispiel 1.3 zu Beispiel 1.4 die Daumenführung immer weiter reduziert wird,
- Fig. 8: den mittleren Ausschnitt eines Blasinstrumentes mit Mundrohr, Ventilblock und der auf das Mundrohr aufgesteckten Lernhilfe, wobei die Möglichkeit gezeigt wird, die Lernhilfe durch Positionierung entlang des Mundrohres, näher oder weiter weg vom Ventilblock, auf die Größe der Musikerhand einzustellen,
- Fig. 9: eine seitliche Ansicht eines Blasinstrumentes (am Beispiel einer Trompete) und der auf das Mundrohr aufgesteckten Lernhilfe, wobei die Daumenführung bzw. die Anschlagfläche des Anschlags der Daumenführung in einem Winkel von 30° in Richtung des Mundstückes gedreht ist,
- Fig. 10: eine perspektivische Darstellung eines Blasinstrumentes mit der aufgesteckten Lernhilfe und der Kippachse, um welche die Daumenführung für die Daumenspitze bzw. die Anschlagfläche des Anschlags der Daumenführung in Richtung des Mundstückes gedreht werden kann und
- Fig. 11: die Darstellung aus Fig. 10, wobei die Verkippung der Anschlagsfläche des Anschlags der Daumenführung mittels Ebenen dargestellt ist.

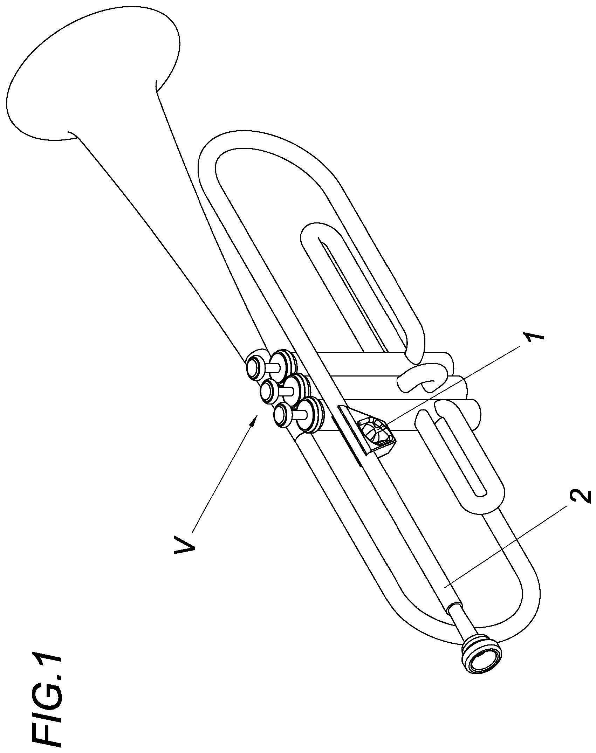

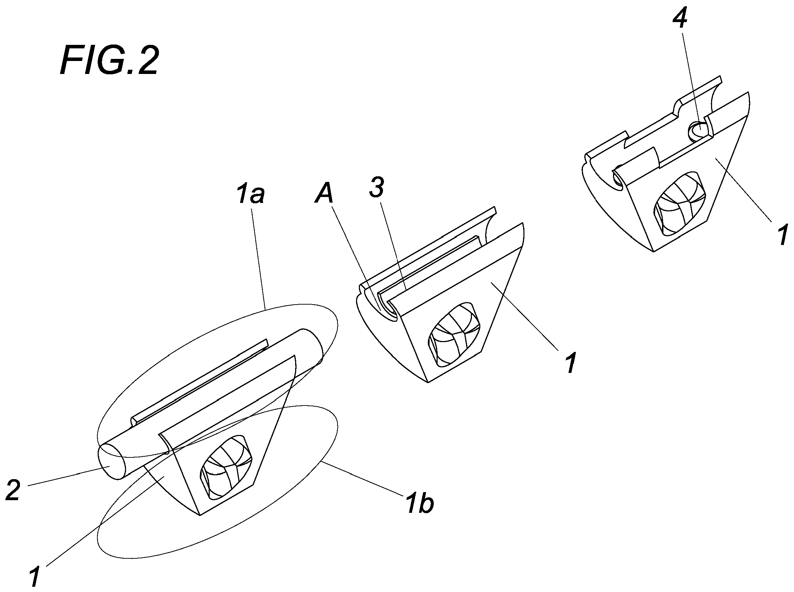

Eine erfindungsgemäße Lernhilfe 1 zur Förderung einer technisch richtigen Griff- bzw. Handgelenksstellung kann, wie beispielsweise der Fig. 1 zu entnehmen ist, auf einem Mundrohr 2 eines Blechblasinstruments lösbar angeordnet sein. Hierzu weist die Lernhilfe 1 eine Aufnahme 1a für das Mundrohr 2 auf, von der eine Daumenführung 1b zum Positionieren eines Daumens abragt, wie dies insbesondere in Fig. 2 angedeutet ist. Vorzugsweise ragt die Daumenführung 1b in eine von den Ventilknöpfen V abgewandte Richtung ab, wenn die Lernhilfe 1 am Mundrohr 2 aufgesteckt ist (Fig. 1).

Fig. 2 zeigt eine beispielhafte Ausführungsform der erfindungsgemäßen Lernhilfe 1. Die erste wesentliche Aufgabe, welche die Lernhilfe 1 erfüllen muss, ist die Befestigung am Mundrohr 2. In einer ersten Ausführungsform umfasst die Lernhilfe 1 das Mundrohr 2 mit einem oberen Teilstück, welches die Aufnahme 1a bildet, teilweise und stellt eine formschlüssige Verbindung zum Mundrohr 2 her. Die zweite wesentliche Aufgabe der Lernhilfe 1 ist die eigentliche Funktion als Daumenführung 1b (Positionsanleitung) für den Daumen. Dies geschieht mittels eines unter der Klammer befindlichen Teilstückes, welches die Daumenspitze ganz oder teilweise aufnimmt, bis sich der Schüler die bevorzugte Handgelenksstellung angewöhnt hat.

Gemäß Fig. 2 kann die Aufnahme 1a eine formschlüssige, vorzugsweise eine form- und kraftschlüssige Befestigung ausbilden, wodurch ein sicherer Halt der Lernhilfe erzielt werden kann, ohne einen Lösevorgang zu behindern. Dies bedeutet, dass die formschlüssige Verbindung zwischen Lernhilfe und Mundrohr 2 durch Vorspannen der Umfassung der Aufnahme 1a auch zusätzlich kraftschlüssig ausgeführt werden kann, wodurch eine Klemmverbindung entsteht. Das Material der Lernhilfe kann eine gewisse Elastizität aufweisen, damit die Umfassung im Montagevorgang etwas geöffnet werden kann.

Um die Verbindung zum Mundrohr 2 des Blechblasinstruments weiter zu verbessern, kann eine Aufnahmefläche A der Aufnahme 1a mit einer reibungsverstärkenden Einlage 3, insbesondere mit einer Gummierung oder Silikoneinlage, versehen sein. Dies bedeutet, dass die Kontaktfläche zum Mundrohr 2 des Blechblasinstruments (Innenseite der Umfassungsklammer) beispielsweise mit einer zusätzlichen Gummierung versehen sein kann. Alternativ können anstelle der Gummierung auch Silikoneinlagen oder andere reibungsverstärkende Einlagen 4 integriert werden.

Bevorzugt wird die Lernhilfe 1 aus Kunststoff ausgeführt. Grundsätzlich kommen als Materialien auch Holz oder Metall, sowie eine Kombination dieser Materialien in Frage. Das Material der Lernhilfe 1 weist vorzugsweise zumindest im Bereich des oberen Teilstückes, welches das Mundrohr 2 umgreift, eine gewisse Elastizität auf, damit die Umfassung im Montagevorgang etwas geöffnet werden kann. Die Fertigung der Lernhilfe 1erfolgt vorzugsweise 1-teilig. Nach Erstellung eines 3D Volumenkörpers, kann die erfindungsgemäße Lernhilfe 1 z.B. mittels 3D Druck in Kunststoff oder Metall hergestellt werden.

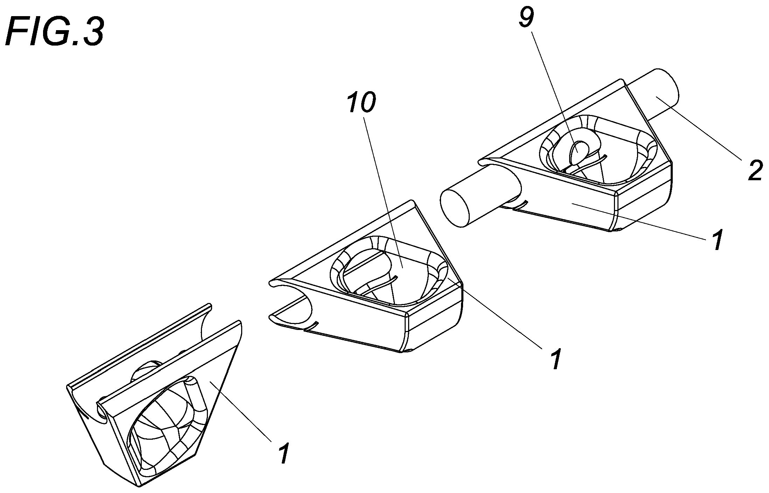

Fig. 3 zeigt Ansichten der Lernhilfe 1 (zuerst aufrechtstehend, dann zur besseren Darstellung 2x auf die Seite gelegt) in Bezug auf den Kontakt des Daumens zum Mundrohr 2. Bei dieser bevorzugten Variante ist die Daumenführung 1b für die Daumenspitze derart ausgeführt, dass die Daumenführung 1b für die Daumenspitze gegen das Mundrohr 2 hin offen ist und der Daumen somit bei aufgesteckter Lernhilfe immer noch Kontakt zum Mundrohr 2 des Blechblasinstruments hat. Die Daumenführung 1b kann demnach zur Aufnahme 1a hin durchbrochen sein. So kann dem Schüler ein entsprechend natürliches Kontaktgefühl zum Mundrohr 2 vermittelt werden, welches Ihm dann nach Abnahme der Lernhilfe 1 helfen kann, die bevorzugte Positionierung des Daumens wieder zu finden. Falls dies vom Lehrer als zusätzlich Maßnahme sinnvoll erachtet wird, kann innerhalb dieser Öffnung direkt auf das Mundrohr 2 auch ein zusätzliches Teilstück der Lernhilfe 1 eingebracht werden. Dieses zusätzliche Teilstück welches fortan Referenzpunkt 9 bezeichnet wird, sollte eine für den Schüler fühlbare Haptik aufweisen. Dieser Referenzpunkt 9 kann ebenfalls als 3D-Druckteil mit rückseitig aufgebrachtem doppelseitigem Klebeband ausgeführt werden. Mithilfe des doppelseitigen Klebebandes kann der Referenzpunkt 9 dann an das Mundrohr 2 geklebt werden. Alternativ könnte der Referenzpunkt 9 aber auch mit einer texturierten Klebefolie oder ähnlichem ausgeführt werden. Dieser Referenzpunkt 9 kann dann zwei weitere Funktionen erfüllen. Da der Referenzpunkt 9 auch nach Abnahme der Lernhilfe 1 weiterhin am Instrument verbleiben kann, hat der Schüler auch nach Abnahme der Lernhilfe 1 noch diesen Referenzpunkt 9 zur Verfügung, um sich weiterhin an die bevorzugte Handgelenksstellung zu erinnern bzw. diese weiter zu verinnerlichen. Zusätzlich kann mithilfe dieses Referenzpunktes 9 die richtige Position der Lernhilfe 1 entlang des Mundrohres 2 nach temporärer Abnahme der Lernhilfe 1 bei der Wiedermontage sofort wiedergefunden werden. Somit wird ein Mundrohr 2 mit einer Lernhilfe 1 geschaffen, wobei die Daumenführung 1a so gegen das Mundrohr 2 hin offen ist, dass der Daumen bei aufgesteckter Lernhilfe 1 Kontakt zum Mundrohr 2 oder zu einem im Bereich der Öffnung angeordneten, als Referenzpunkt 9 wirkenden zusätzlichen Teilstück hat.

Wie aus der Fig. 3 zu entnehmen ist, kann die Daumenführung 1b einen Anschlag 10 für eine Daumenbeere des Daumens bilden. Durch den Anschlag 10 kann eine Kipplage des Daumens vorgegeben werden, wenn die Daumenbeere gegen den Anschlag 10 andrückt, in Folge dessen auch die Handgelenksstellung beeinflusst werden kann.

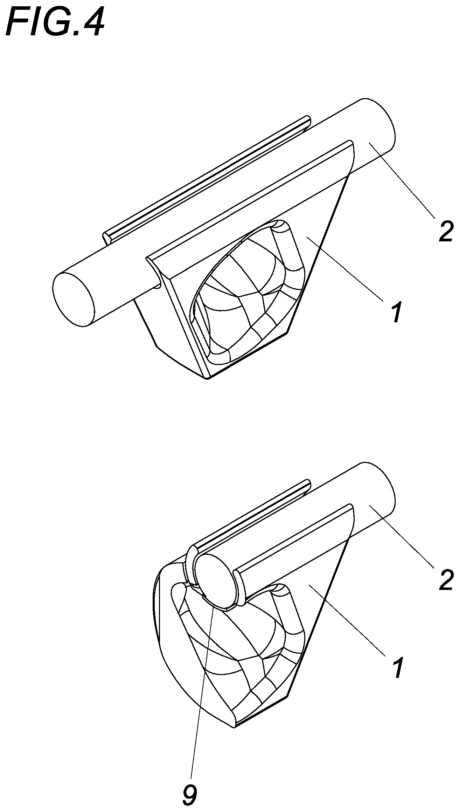

Fig. 4 zeigt eine Ansicht von der Lernhilfe 1 und dem Mundrohr 2, sowie darunter einen Schnitt durch die Lernhilfe 1 und das Mundrohr 2, in einer bevorzugten Variante, bei der der Daumen auch bei aufgesteckter Lernhilfe 1 Kontakt zum Mundrohr 2 hat. Der Schnitt zeigt auch den zuvor beschriebenen alternativen Referenzpunkt 9. Damit könnte der Daumen keinen direkten Kontakt mehr zum Mundrohr haben, da der Referenzpunkt 9 vollständig zwischen Mundrohr 2 und Daumen liegen würde.

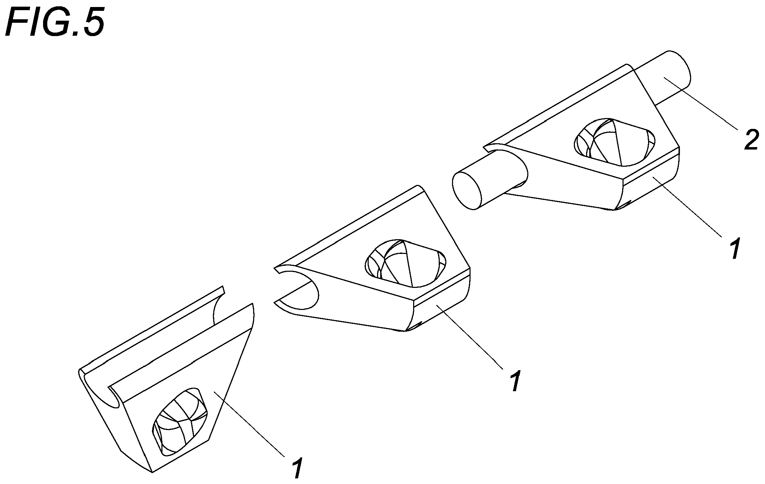

Fig. 5 zeigt Ansichten der Lernhilfe 1 (zuerst aufrechtstehend, dann zur besseren Darstellung 2x auf die Seite gelegt) in Bezug auf den Kontakt des Daumens mit dem Mundrohr 2. Bei dieser Variante ist die Daumenführung 1b für den Daumen gegen das Mundrohr hin geschlossen. Dadurch hat der Daumen keinerlei Kontakt zum Mundrohr 2.

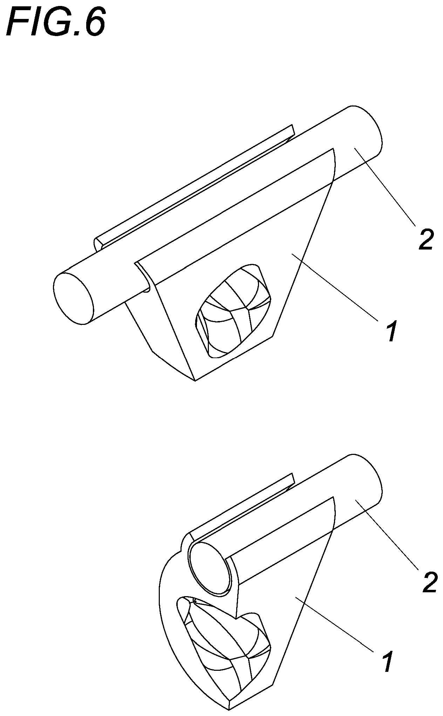

Fig. 6 zeigt eine Ansicht von der Lernhilfe 1 und dem Mundrohr 2 und darunter einen Schnitt durch die Lernhilfe 1 und das Mundrohr 2, in der zuvor beschriebenen Variante, ohne Kontakt des Daumens zum Mundrohr 2.

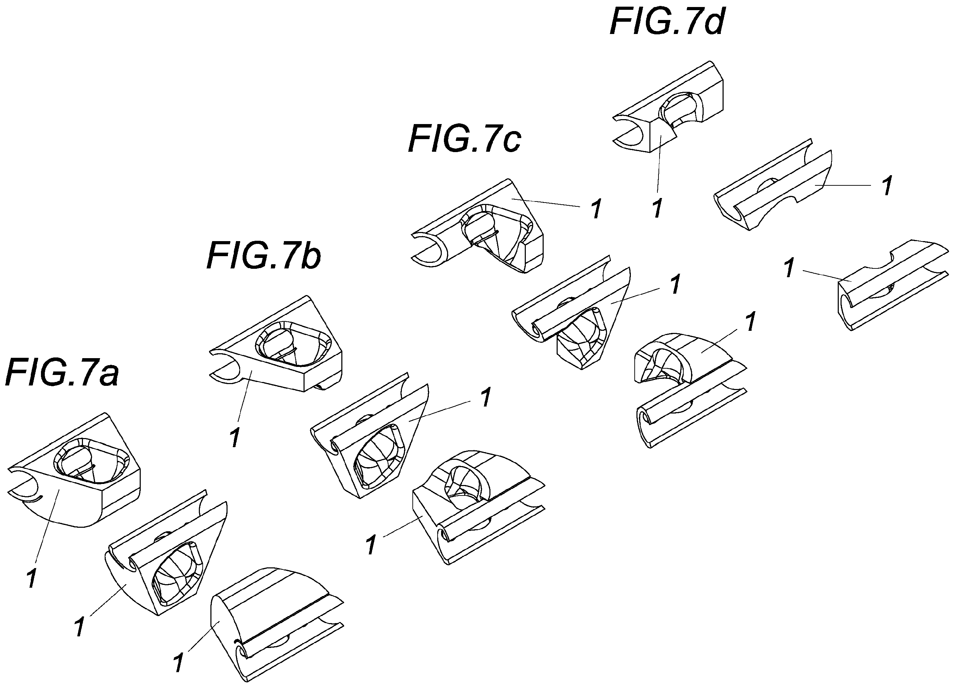

Figs. 7a bis 7d zeigen unterschiedliche Ausführungsformen der Lernhilfe 1 in Bezug auf die Daumenführung 1b für den Daumen.

Fig. 7a zeigt eine beispielhafte Ausführung mit einer geschlossenen Mulde für die Daumenspitze.

Die Ausführungsform gemäß Fig. 7b ist an der hinteren Seite geöffnet. Die Daumenführung 1b umfasst somit eine Durchbruchsöffnung zum Einfassen einer Daumenkuppe.

Fig. 7c zeigt einen Vorschlag, bei der nur vorne ein Anschlag für den Daumen ausgeführt wird. Die Daumenführung 1b bildet somit einen Anschlagzapfen.

Die Ausführungsform gemäß Fig. 7d gibt nur mehr minimale Führung für die Daumenspitze bzw. Daumenkante an der Unterseite des Mundrohres 2 vor. Hier wird nur mehr eine Kerbe geschaffen, in welche die Daumenspitze bzw. Daumenkante eingelegt wird. Diese Minimalvariante ist für fortgeschrittene Schüler gedacht und kann als letzte Hilfestellung dienen, bevor der Schüler komplett auf die Lernhilfe 1 verzichten kann.

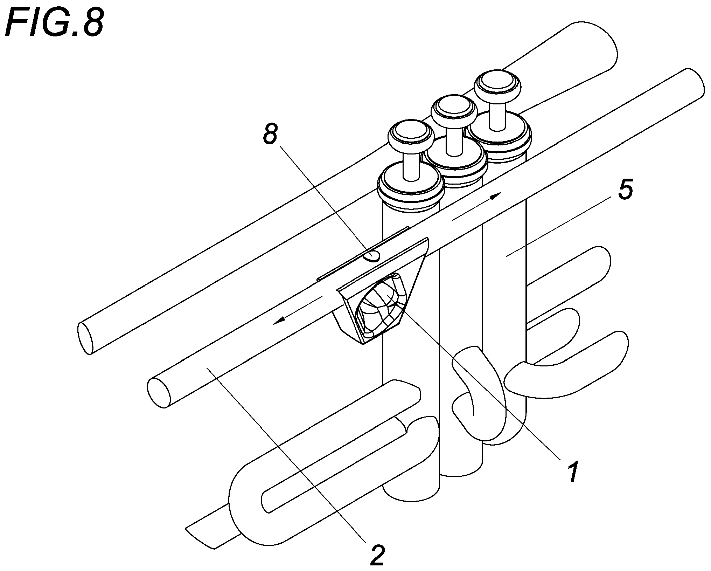

Fig. 8 zeigt den mittleren Ausschnitt eines Blasinstrumentes mit dem Mundrohr 2, dem Ventilblock 5 und der aufgesteckten Lernhilfe 1. Die Lernhilfe 1 kann auf die Größe der Hand eingestellt werden, indem diese näher an den Ventilblock 5 herangeschoben, oder weiter weg von dem Ventilblock 5 positioniert wird. Vorzugsweise erfolgt die Einstellung der Lernhilfe auf den Schüler mithilfe der Unterstützung durch seinen Lehrer. Einmal ermittelt, kann die optimale Position der Lernhilfe 1 mit einem Klebepunkt 8 auf dem Mundrohr 2 gekennzeichnet werden. So kann die ideale Position der Lernhilfe nach einer temporären Abnahme jederzeit einfach wiedergefunden werden.

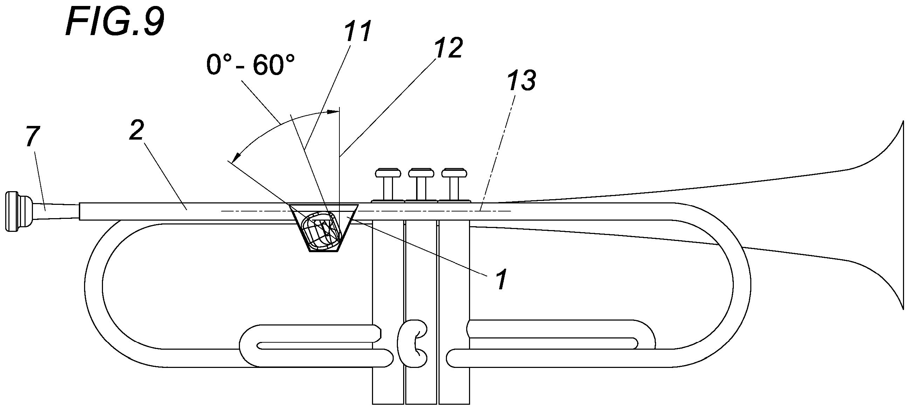

Fig. 9 zeigt eine Ansicht einer Trompete von der Seite mit einer auf das Mundrohr 2 aufgesteckten Lernhilfe 1. Diese Ansicht soll verdeutlichen, dass die Daumenführung 1b für die Daumenspitze vorzugsweise nicht rechtwinkelig zum Mundrohr 2 ausgeführt wird, sondern je nach Instrument in einem Winkel von bis zu 60°in Richtung des Mundstückes gedreht werden soll. Dies ist vorteilhaft, um eine möglichst anatomisch ideale Anstellung des Handgelenkes vorzugeben.

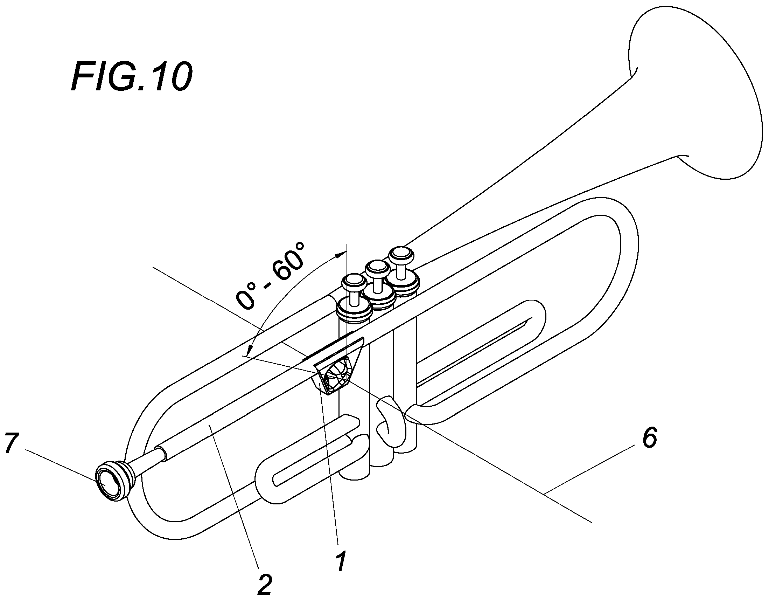

Fig. 10 zeigt eine perspektivische Darstellung einer Trompete mit einer auf das Mundrohr 2 aufgesteckten Lernhilfe 1. Diese perspektivische Darstellung soll weiter verdeutlichen, dass die Daumenführung 1b für die Daumenspitze vorzugsweise nicht im rechten Winkel zum Mundrohr 2 ausgeführt werden soll, sondern in einem Winkel von bis zu 60° um eine Kippachse 6 in Richtung des Mundstückes 7 gekippt werden soll.

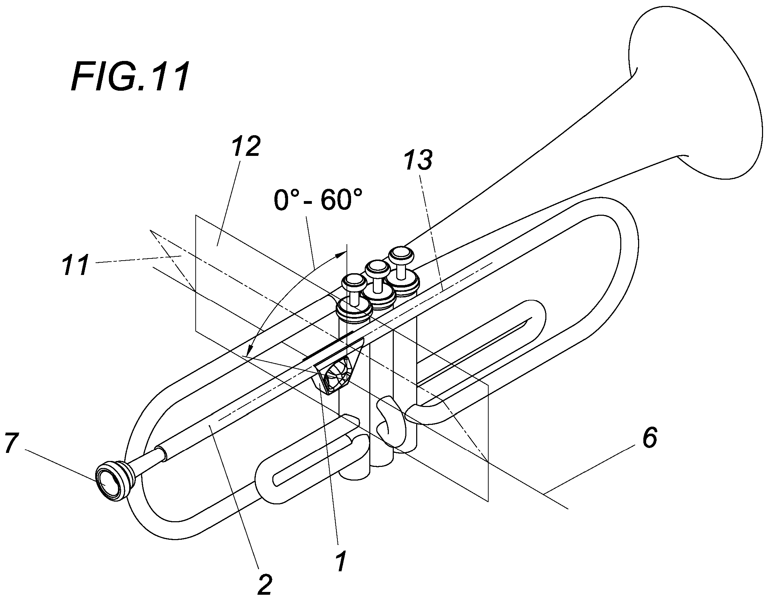

Zur Konkretisierung der Kipplage der Daumenführung 1b, genauer der Anschlagfläche des Anschlags 10, können insbesondere die Figs. 9 und Fig. 11 herangezogen werden. Aus diesen Figuren ist ersichtlich, dass die Anschlagfläche des Anschlags 10 wenigstens abschnittsweise in einer Kippfläche 11 verläuft, die aus einer Bezugsfläche 12, die normal zur Aufnahmelängsachse 13 verläuft, um eine Kippachse 6 gekippt ist. Der gekippte Anschlag 10 versetzt somit auch den Daumen in Kipplage und zwingt somit dem Musiker eine bevorzugte Handgelenksstellung auf.

## Patentansprüche

1. Lernhilfe (1) für Blechblasinstrumente zur Förderung einer technisch richtigen Griff- bzw. Handgelenksstellung **gekennzeichnet durch** eine Aufnahme (1a) für ein Mundrohr (2) eines Blechblasinstruments, von der eine Daumenführung (1b) zum Positionieren eines Daumens abragt, wobei die Daumenführung (1b) einen Anschlag (10) für eine Daumenbeere des Daumens bildet und wobei eine Anschlagfläche des Anschlags (10) für die Daumenbeere wenigstens abschnittsweise in einer Kippfläche (11) verläuft, die aus einer Bezugsfläche (12), die normal zur Aufnahmelängsachse (13) verläuft, um eine Kippachse (6) gekippt ist.

2. Lernhilfe (1) nach Anspruch 1, **dadurch gekennzeichnet, dass** die Daumenführung (1b) eine Durchbruchsöffnung zum Einfassen einer Daumenkuppe umfasst.

3. Lernhilfe (1) nach Anspruch 1 oder 2, **dadurch gekennzeichnet, dass** die Daumenführung (1b) eine Mulde für die Daumenspitze umfasst.

4. Lernhilfe (1) nach einem der Ansprüche 1 bis 3, **dadurch gekennzeichnet, dass** die Daumenführung (1b) ein Anschlagzapfen ist.

5. Lernhilfe (1) nach einem der Ansprüche 1 bis 4, **dadurch gekennzeichnet, dass** die Daumenführung (1b) zur Aufnahme (1a) für das Mundrohr (2) hin durchbrochen ist.

6. Lernhilfe (1) nach einem der Ansprüche 1 bis 5, **dadurch gekennzeichnet, dass** die Aufnahme (1a) eine formschlüssige, vorzugsweise eine form- und kraftschlüssige Befestigung ausbildet.

7. Lernhilfe (1) nach einem der Ansprüche 1 bis 6, **dadurch gekennzeichnet, dass** eine Aufnahmefläche (A) der Aufnahme (1a) mit einer reibungsverstärkenden Einlage (3,4), insbesondere mit einer Gummierung oder Silikoneinlage, versehen ist.

8. Lernhilfe nach einem der Ansprüche 1 bis 7 **gekennzeichnet durch** eine einstückige Fertigung aus Kunststoff, insbesondere durch eine Fertigung mittels 3D-Druck.

9. Mundrohr (2) mit einer Lernhilfe (1) nach einem der Ansprüche 1 bis 8, wobei die Daumenführung (1a) so gegen das Mundrohr (2) hin offen ist, dass der Daumen bei aufgesteckter Lernhilfe (1) Kontakt zum Mundrohr (2) hat, **dadurch gekennzeichnet, dass** im Bereich der Öffnung ein als Referenzpunkt (9) wirkendes zusätzliches Teilstück angeordnet ist.

## Claims

1. Learning aid (1) for brass instruments for promoting a technically correct grip or wrist position , **characterized by** a receptacle (1a) for a leadpipe (2) of a brass instrument, from which receptacle (1a) a thumb guide (1b) protrudes for positioning a thumb, wherein the thumb guide (1b) forms a stop (10) for a thumb berry of the thumb and wherein a stop surface of the stop (10) for the thumb tip extends at least in sections in a tilting surface (11) which is tilted about a tilting axis (6) from a reference surface (12) which extends normal to the receptacle longitudinal axis (13)..

2. Learning aid (1) according to claim 1, **characterized in that** the thumb guide (1b) comprises a break-through opening for enclosing a thumb pad.

3. Learning aid (1) according to claim 1 or 2, **characterized in that** the thumb guide (1b) comprises a hollow for the tip of the thumb.

4. Learning aid (1) according to one of claims 1 to 3, **characterized in that** the thumb guide (1b) is a stop pin.

5. Learning aid (1) according to one of claims 1 to 4, **characterized in that** the thumb guide (1b) is perforated towards the receptacle (1a) for the lead pipe (2).

6. Learning aid (1) according to one of claims 1 to 5, **characterized in that** the receptacle (1a) forms a form-fit, preferably a form- and force-fit fastening.

7. Learning aid (1) according to one of claims 1 to 6, **characterized in that** a receiving surface (A) of the receptacle (1a) is provided with a friction-enhancing insert (3, 4), in particular with a rubber coating or silicone insert.

8. Learning aid according to one of claims 1 to 7, **characterized by** one-piece production from plastic, in particular by production using 3D printing.

9. Lead pipe (2) with a learning aid (1) according to one of claims 1 to 8, wherein the thumb guide (1a) is open towards the lead pipe (2) in such a way that the thumb has contact with the lead pipe (2) when the learning aid (1) is attached, **characterized in that** an additional part acting as a reference point (9) is arranged in the region of the opening.

## Revendications

1. Aide à l'apprentissage (1) pour instruments de musique à vent en tôle, destinée à encourager une position d'articulation techniquement correcte de la prise respectivement du poignet, **caractérisée par** une réception (1a) pour une embouchure (2) d'un instrument de musique à vent en tôle, depuis laquelle un guidage de pouce (1b) fait saillie pour positionner un pouce, dans laquelle le guidage de pouce (1b) forme une butée (10) pour un coussinet de pouce du pouce et dans laquelle une surface de butée de la butée (10) pour le coussinet de pouce s'étend au moins par sections dans une surface de basculement (11) qui bascule autour d'un axe de basculement (6) à partir d'une surface de référence (12) qui s'étend de manière normale par rapport à l'axe longitudinal de réception (13).

2. Aide à l'apprentissage (1) selon la revendication 1, **caractérisée en ce que** le guidage de pouce (1b) comprend une ouverture percée pour encadrer l'extrémité arrondie d'un pouce.

3. Aide à l'apprentissage (1) selon la revendication 1 ou 2, **caractérisée en ce que** le guidage de pouce (1b) comprend une cuvette pour le bout de pouce.

4. Aide à l'apprentissage (1) selon une des revendications 1 à 3, **caractérisée en ce que** le guidage de pouce (1b) est un cône de butée.

5. Aide à l'apprentissage (1) selon une des revendications 1 à 4, **caractérisée en ce que** le guidage de pouce (1b) est percé pour la réception (1a) de l'embouchure (2).

6. Aide à l'apprentissage (1) selon une des revendications 1 à 5, **caractérisée en ce que** la réception (1a) forme une fixation par complémentarité de forme, de préférence par complémentarité de forme et de force.

7. Aide à l'apprentissage (1) selon une des revendications 1 à 6, **caractérisée en ce qu'**une surface de réception (A) de la réception (1a) est munie d'un apport de renforcement au frottement (3, 4), en particulier d'un engommage ou d'un apport de silicone.

8. Aide à l'apprentissage selon une des revendications 1 à 7 **caractérisée par** une fabrication d'un seul tenant en matière plastique, en particulier par une fabrication à l'aide d'une impression 3D.

9. Embouchure (2) avec une aide à l'apprentissage (1) selon une des revendications 1 à 8, dans laquelle le guidage de pouce (1a) est ouvert contre l'embouchure (2) de telle sorte que le pouce soit en contact avec l'embouchure (2) lorsque l'aide à l'apprentissage (1) est mise en place, **caractérisée en ce qu'**au niveau de l'ouverture est disposée une pièce partielle supplémentaire agissant comme un point de référence (9).
